# EUROPEAN PATENT APPLICATION

(11) **EP 2 161 697 A1**
(43) Date of publication of application: **10.03.2010**
(21) Application number: 07767431.5
(22) Date of filing: 22.06.2007
(51) Int. Cl.: G08G 1/00, G01C 21/00, G07C 5/00

(54) **INFORMATION COLLECTING DEVICE, INFORMATION COLLECTING METHOD, INFORMATION COLLECTING PROGRAM, AND RECORDING MEDIUM**

(71) Applicant: Pioneer Corporation, Tokyo 153-8654 (JP)
(72) Inventor: MORI, Kunihiko, Kawagoe-shi Saitama 350-8555 (JP); KAWAGUCHI, Shinpei, Kawagoe-shi Saitama 350-8555 (JP); TAKEDA, Kenji, Kawagoe-shi Saitama 350-8555 (JP); KAIDU, Hiroyuki, Kawagoe-shi Saitama 350-8555 (JP); SASAKI, Masaru, Kawagoe-shi Saitama 350-8555 (JP); OHKUBO, Hirotoshi, Kawagoe-shi Saitama 350-8555 (JP); HATTORI, Kana, Kawagoe-shi Saitama 350-8555 (JP)
(74) Representative: Haley, Stephen
(86) International application number: PCT/JP2007/062622
(87) International publication number: WO 2009/001418

(57) **Abstract**

An information collecting apparatus (100) includes an acquiring unit (101), an extracting unit (102), and a determining unit (103). The acquiring unit (101) acquires travel histories of mobile objects. The extracting unit (102), based on the travel histories acquired by the acquiring unit (101), extracts a stopping area where a given number of mobile objects or more have stopped within a given area for a given period of time or longer. The determining unit (103) determines the stopping area extracted by the extracting unit (102) to be a recommended stopping area when a given feature is in a vicinity of the stopping area.

## Description

### TECHNICAL FIELD

The present invention relates to an information collecting apparatus, an information collecting method, an information collecting program, and a recording medium. However, application of the present invention is not limited to the information collecting apparatus, the information collecting method, the information collecting program, and the recording medium above.

### BACKGROUND ART

In recent years, from the perspective of global warming, the so-called "idle stop" of stopping the engine of a vehicle when the vehicle comes to a halt has been implemented to reduce fuel consumption and carbon dioxide emissions. For example, when a vehicle stops, idle stop is performed directly by the user when the user visually recognizes a signal indicating to stop, such as a traffic signal or a rail crossing warning. Accordingly, under such a method, when the user is in an unfamiliar place, the user cannot approximate the duration of the stop and thus, if the engine is cut and immediately thereafter, the traffic signal turns green, conversely, fuel efficiency may decrease.

Technology has been proposed that, for example, acquires time information for traffic signals, information concerning other vehicles connected through a network, etc. and based on the acquired information, calculates the number of times a traffic signal must change in order for the vehicle to pass to thereby inform the user of an approximate duration of the stop (for example, refer to Patent Document 1 below).

Patent Document 1: Japanese Patent Application Laid-Open Publication No. 2004-205389

### DISCLOSURE OF INVENTION

### PROBLEM TO BE SOLVED BY THE INVENTION

However, according to the technology of Patent Document 1, the presence of a traffic signal is presumed and at places where there is no traffic signal, the duration of the stop cannot be determined and for the user, it is unclear when idle stop should be executed. Hence, some problems may arise, for example, improved fuel efficiency, reduced carbon dioxide emission, etc. cannot be effectively achieved, with idle stop not being performed at an appropriate point.

### MEANS FOR SOLVING PROBLEM

To solve the above problems and achieve an object, An information collecting apparatus includes an acquiring unit that acquires travel histories for mobile objects; an extracting unit that based on the travel histories acquired by the acquiring unit, extracts a stopping area where a given number of mobile objects or more have stopped within a given area for a given period of time or longer; and a determining unit that determines the stopping area extracted by the extracting unit to be a recommended stopping area when a given feature is in a vicinity of the stopping area.

An information collecting method according to the invention of claim 7 includes acquiring travel histories for mobile objects; extracting, based on the travel histories acquired at the acquiring, a stopping area where a given number of mobile objects or more have stopped within a given area for a given period of time or longer; and determining the stopping area extracted at the extracting to be a recommended stopping area when a given feature is in a vicinity of the stopping area.

An information collecting program according to the invention of claim 8 causes a computer to execute the information collecting method according to claim 7.

A computer readable recording medium according to the invention of claim 9 stores therein the information collecting program according to claim 8.

### BRIEF DESCRIPTION OF DRAWINGS

Fig. 1 is a block diagram of one example of a functional configuration of an information collecting apparatus according to an embodiment;
Fig. 2 is a flowchart of one example of information collection processing by the information collecting apparatus according to the embodiment;
Fig. 3 is a block diagram of one example of a hardware configuration of a server according to an example;
Fig. 4 is a flowchart of one example of information collection processing by the server according to the example;
Fig. 5 is a flowchart of transmission processing by the server according to the example;
Fig. 6 is a schematic of one example of data recorded to the server according to the example; and
Fig. 7 is a schematic of one example of a navigation apparatus display screen based on the data recorded on the server according to the example.

### EXPLANATIONS OF LETTERS OR NUMERALS

- 100: information collecting apparatus
- 101: acquiring unit
- 102: extracting unit
- 103: determining unit
- 104: calculating unit
- 105: transmitting unit
- 106: identifying unit
- 300: server

### BEST MODE(S) FOR CARRYING OUT THE INVENTION

With reference to the accompanying drawings, a preferred embodiment of an information collecting apparatus, an information collecting method, an information collecting program, and a recording medium according to the present invention will be described.

### (Embodiment)

### (Functional Configuration of Information Collecting Apparatus 100)

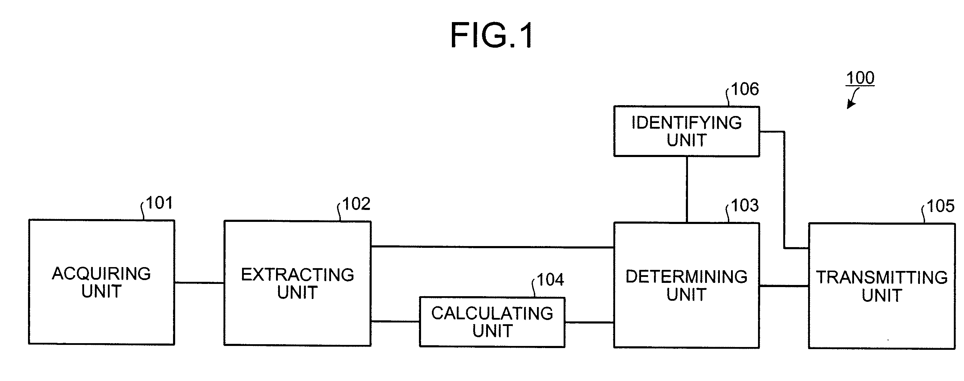

An information collecting apparatus 100 according to an embodiment of the present invention will be described. Fig. 1 is a block diagram of one example of a functional configuration of the information collecting apparatus 100. As depicted in Fig. 1, the information collecting apparatus 100 includes an acquiring unit 101, an extracting unit 102, a determining unit 103, a calculating unit 104, a transmitting unit 105, and an identifying unit 106.

The acquiring unit 101 acquires travel histories for mobile objects. The acquiring unit 101, for example, acquires the travel history of a mobile object from a navigation apparatus equipped on the mobile object. Travel history is information including, for example, latitude and longitudinal information, the time when a point is passed, the speed and direction of travel at each point, road types, the state of the parking brake (ON/OFF), the total distance traveled, etc. Besides wired and wireless communication, the means of travel history acquisition may be based on reading in data from a recording medium, based on user input.

The extracting unit 102, based on the travel histories acquired by the acquiring unit 101, extracts a stopping area where a given number of mobile objects or more have stopped within a given area for a given period of time or longer. A given area is an area in which vehicles are caused to come to a stop, such as traffic congestion, due to a given feature explained hereinafter, and is preliminarily set with respect to position, time, etc. A given number of mobile objects may be the number of mobile objects that have stopped, the ratio of the number mobile objects that have stopped to the total number that have passed, a value preliminarily set according position and time.

A given period of time, specifically, is the time needed to effect fuel consumption that is lower when idle stop is executed than when idling occurs, and varies according to vehicle type, air conditioner usage, etc., but may be, for example, 5 or 10 seconds. Stop duration may be calculated based on travel history concerning the time of a stop and the time of travel resumption, by subtracting the time of the stop from the time at which travel resumes. Further, stop duration may be calculated based on the parking brake on/off history, by subtracting the time at which the parking brake is set from the time at which the parking brake is released.

When a given feature is in the vicinity of a stopping area extracted by the extracting unit 102, the determining unit 103 determines the stopping area as a recommended idle stop area. A given feature is a feature that causes mobile objects to come to a stop, e.g., traffic congestion, and typically includes railroad crossings, traffic signals, train stations, parking lots, etc., though, intersections, points where traffic merges, bridges, etc. may also be causes. In particular, in the case of parking lots, large parking lots at tourist facilities or for complex facilities may be cited as a cause. Further, the vicinity of a stopping area, specifically, is defined to be an area within a given distance from the stopping area in the direction of travel of the mobile object and is within a range in which mobile objects are caused to come to a stop, e.g., traffic congestion, due to a given feature.

In the present embodiment, the calculating unit 104 is an arbitrary component. The calculating unit 104 calculates the average time that mobile objects stop in a recommended idle stop area, based on the number of mobile objects stopped in the stopping area extracted by the extracting unit 102 and the duration of the stops. The calculating unit 104, specifically, may calculate the average duration of a stop by dividing the sum of stop durations for the mobile objects by the number of mobile objects stopped in the stopping area.

The acquiring unit 101 according to the present embodiment may acquire time or weather information included in the travel histories of the mobile objects. In this case, the extracting unit 102 extracts a stopping area according to the time or weather information included in the travel histories acquired by the acquiring unit 101. Further, the determining unit 103 determines a recommended idle stop area according to the time or the weather, based on the stopping area extracted by the extracting unit 102. The above time is a time of day; type of day such as weekday, weekend, or holiday; a designated period such as a season, summer holiday, etc. Weather includes fair, rain, cloudy, snow, etc.

Further in the present embodiment, when information concerning a recommended idle stop area is supplied to a navigation apparatus equipped on a mobile object, for example, the information may be read in by the navigation apparatus using a recording medium, or may be transmitted through the provision of the transmitting unit 105. In other words, the transmitting unit 105 transmits position information concerning recommended idle stop areas to the mobile object. This position information is information appended to map information. The transmission of the position information concerning the recommended idle stop areas may or may not be periodic, may be at the time when travel history is acquired from the mobile object, may be upon receipt of a transmission request from the mobile object, etc.

In the present embodiment, the identifying unit 106 is an arbitrary component. The identifying unit 106 identifies the current position of the mobile object. In this case, the transmitting unit 105 transmits position information concerning a recommended idle stop area to a mobile object when the current position thereof has been identified by the identifying unit 106 to be within a given range from the recommended idle stop area. The identifying unit 106 may identify the current position of the mobile object based on, for example, position information of the mobile object and identification information that are received for the mobile object, etc.

In addition to when the current position is at a given distance to a recommended idle stop area, "within a given range from a recommended idle stop area" includes, specifically, when the current position is in the recommended idle stop area. Further, when the information collecting apparatus 100 appropriately transmits map data to a navigation apparatus, etc., a recommended idle stop area on the route may be extracted, and the map data and map data to which information concerning the recommended idle stop area is appended may be transmitted.

### (Information Collection Processing by Information Collecting Apparatus 100)

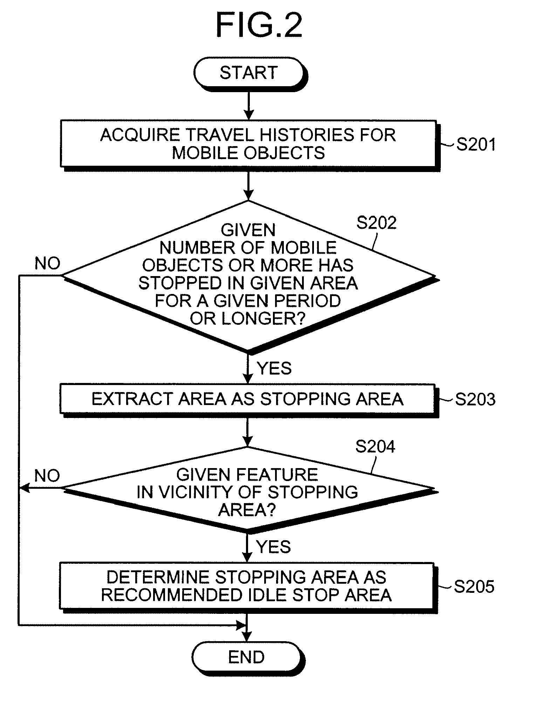

With reference to Fig. 2, information collection processing by the information collecting apparatus 100 will be described. Fig. 2 is a flowchart of one example of information collection processing by the information collecting apparatus 100 according to the present embodiment.

As depicted in the flowchart of Fig. 1, the acquiring unit 101 of the information collecting apparatus 100 acquires the travel history of mobile objects (step S201). Based on the travel histories, it is determined whether a given number of mobile objects or more have stopped within a given area for a given period or longer (step S202). The determination at step S202 involves determining whether three conditions are met, including whether stopping positions are within a given preliminarily set range, whether the number of stopped mobile objects is at least a given number, and whether the duration of the stop is at least equal to a given period of time. At step S202, if it is determined that a given number of mobile objects or more have stopped within a given range for a given period or longer (step S202: YES), the area is extracted as a stopping area (step S203).

It is determined whether a given feature is in the vicinity of the stopping area (step S204). At step S204, if a given feature is in the vicinity of the stopping area (step S204: YES), the stopping area is determined as a recommended idle stop area (step S205), ending a series of the processing.

Conversely, at step S202, if it is determined that a given number of mobile objects or more have not stopped within a given area for a given period or longer (step S202: NO), a series of the processing ends. At step S204, if it is determined that no given feature is in the vicinity of the stopping area (step S204: NO), a series of the processing ends.

As described, when a given feature is in the vicinity of a stopping area that is among stopping areas extracted according to given conditions, the information collecting apparatus 100 according to the present embodiment determines the stopping area as a recommended idle stop area. By using such position information concerning a recommended idle stop area, the user is able to know locations where idle stop should be executed. Thus, since idle stop can be executed at an appropriate location, improved fuel consumption and reduced carbon dioxide emission can be effectively achieved.

The information collecting apparatus 100 according to the present embodiment may further include the calculating unit 104 that calculates the average duration of a stop by mobile objects at a recommended idle stop area. According to such configuration, the user is able to know the average stop duration at a recommended idle stop area.

The travel history of a mobile object may include time or weather information. Thus, the collecting apparatus 100 according to the present embodiment can determine a more precise recommended idle stop area according to the time or the weather.

When a railroad crossing, traffic signal, train station, or parking lot (a given feature) is in the vicinity of a stopping area, the information collecting apparatus 100 according to the present embodiment may determine a given range that includes the stopping area, as a recommended idle stop area. According to such configuration, a stop of a mobile object is limited to the most conceivable location and a recommended idle stop area can be determined.

The information collecting apparatus 100 according to the present embodiment may further include the transmitting unit 105. According to such configuration, appropriate transmission of position information concerning a recommended idle stop area is enabled and the user can use the transmitted position information to execute idle stop.

The information collecting apparatus 100 according to the present embodiment may include the identifying unit 106 and when the current position of a mobile object is identified to within a given range from a recommended idle stop area, position information concerning the recommended idle stop area may be transmitted to the mobile object. According to such configuration, the user can obtain position information concerning the recommended idle stop area near the current position in real time.

### [Example]

An example of the present invention will be described. The present example is one example of implementation of the information collecting apparatus of the present invention. In the example, the information collecting apparatus is implemented by a data management server that receives various types of data from navigation apparatuses equipped on mobile objects such as vehicles (including four-wheeled and two-wheeled vehicles).

### (Hardware Configuration of Server 300)

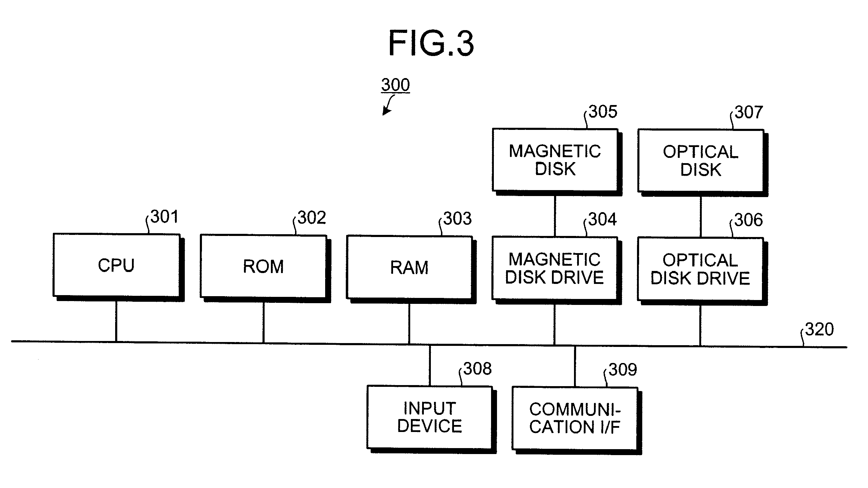

With reference to Fig. 3, a hardware configuration of a server 300 according to the present example will be described. Fig. 3 is a block diagram of one example of a hardware configuration of the server according to the present example. As depicted in Fig. 3, the server 300 includes a CPU 301, a ROM 302, a RAM 303, a magnetic disk drive 304, a magnetic disk 305, an optical disk drive 306, an optical disk 307, an input device 308, and a communication I/F 309 that are respectively connected through a bus 320.

The CPU 301 governs overall control of the server 300. The ROM 302 stores therein various programs, such as a boot program and a recommended idle stop area determining program. The RAM 303 is used as a work area of the CPU 301. In other words, the CPU 301, while using the RAM 303 as a work area, executes the various program stored on the ROM 302 to govern overall control of the server 300.

The recommended idle stop area determining program acquires travel histories for vehicles and based on the acquired travel histories, extracts stopping areas of the vehicles. If a given feature is in the vicinity of a stopping area, the recommended idle stop area determining program determines the position as a recommended idle stop area.

The magnetic disk drive 304, under the control of the CPU 301, controls the reading and the writing of data with respect to the magnetic disk 305. The magnetic disk stores data written thereto under the control of the magnetic disk drive 304. A hard disk (HD), flexible disk (FD), etc. may be used as the magnetic disk 305.

The optical disk drive 306, under the control of the CPU 301, controls the reading and the writing of data to the optical disk 307. The optical disk is a removable recording medium from which data is readout under the control of the optical disk drive 306. The optical disk 307 may be a writable recording medium. Further, other than the optical disk 307, an MO, memory card, etc. may be used as the removable recording medium.

The input device 308 includes a remote controller having keys for entering characters, numeric values, and various instructions; a keyboard; a touch panel; etc. The input device 308 may be implemented in single form such as a remote controller, a keyboard, and a touch panel, or may be implemented in multiple forms.

The communication I/F 309 is wirelessly connected to a network and functions as an interface between a PC connected to a communication line and the CPU 301. The communication network includes LANs, WANs, public telephone networks, mobile telephone networks, etc.

Using the programs and data recorded on the ROM 302, the RAM 303, the magnetic disk 305, and the optical disk depicted in Fig. 3, the CPU 301 executes a given program to control each component of the server 300 to implement the functions of the acquiring unit 101, the extracting unit 102, the determining unit 103, the calculating unit 104, the transmitting unit 105, and the identifying unit 106 of the information collecting apparatus 100 depicted in Fig. 1.

In other words, the server 300 of the present example, by executing a navigation program recorded on the ROM 302 serving as a recording medium in the server 300, can execute the functions of the information collecting apparatus 100 depicted in Fig. 1, by the information collection processing depicted in Fig. 2.

### (Example of Information Collection Processing of Server 300)

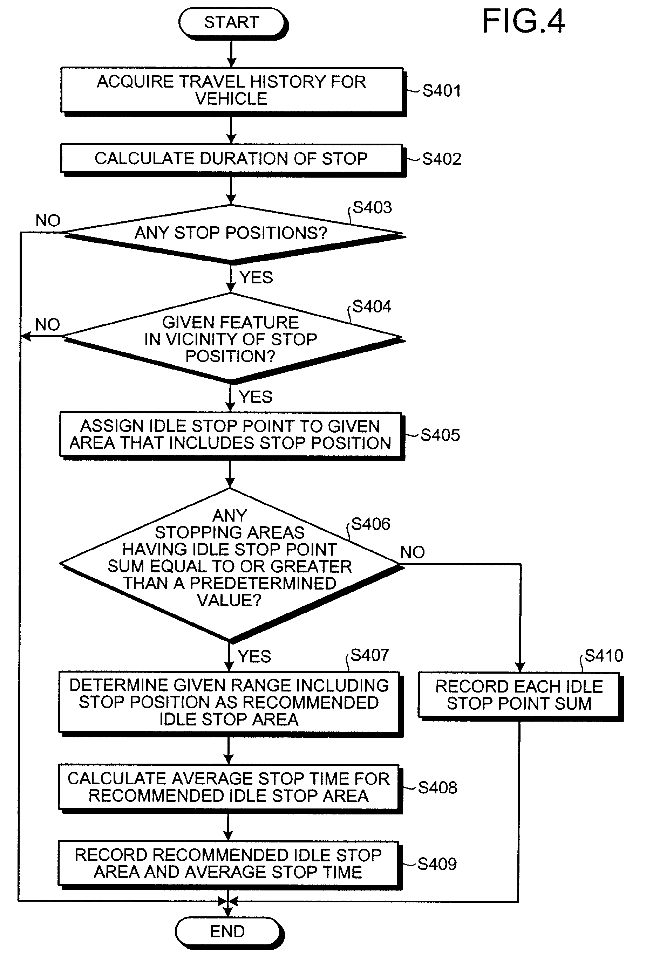

With reference to Fig. 4, one example of information collection processing executed by the server 300 according to the present example will be described. Fig. 4 is a flowchart of one example of information collection processing by the server according to the present example.

As depicted in Fig. 4, the server 300 acquires the travel history for a vehicle (step S401), and calculates the duration of stops occurring in each area during each time of day (step S402). The duration of a stop is calculated based on travel history concerning the time of the stop and the time of travel resumption, by subtracting the time of the stop from the time at which travel resumes. Subsequently, based on the calculated duration of the stops, it is determined whether there is a stop position at which a stop occurs for a given period of time or longer (step S403). The given period of time is the time needed to effect fuel consumption that is lower when idle stop is executed than when idling occurs and is set at, for example, 10 seconds.

At step S403, if there is a stop position at which a stop occurs for a given period or longer (step S403: YES), it is determined whether a given feature is in the vicinity of the stop position (step S404). A given feature is a railroad crossing, a traffic signal, a train station, or a parking lot. At step S404, if a given feature is in the vicinity of the stop position (step S404: YES), an idle stop point is incremented for the given area that includes the stop position, for the time of day (step S405). An idle stop point is numeric expression of a stopping area. In other words, the sum of idle stop points is a value that increases as the number of vehicles stopping in the stop area increases.

It is determined whether there is a stopping area whose idle stop point sum is equal to or greater than a predetermined value (step S406). An idle stop point sum that is equal to or greater than a predetermined value indicates that the number of vehicles stopped in the stopping area is a predetermined number or more. At step S406, if the idle stop point sum is equal to or greater than a predetermined value (step S406: YES), the given area is determined as a recommended idle stop area (step S407). Further, for each time of day, the average duration of a stop in the recommended idle stop area is calculated (step S408). Subsequently, the recommended idle stop area and the average stop duration are recorded (step S409).

On the other hand, at step S406, if there is no stopping area whose idle stop point sum is equal to or greater than a predetermined value (step S406: NO), the idle stop point sums for each of the stopping areas are recorded (step S410), ending a series of the processing. Subsequently, the travel history for another vehicle is acquired and the above processing is similarly executed.

At step S403, if there is no stop position at which a stop occurs for a given period or longer (step S403: NO), a series of the processing ends. At step S404, if there is no feature in the vicinity of the stop position (step S404: NO), a series of the processing ends.

In the present example, configuration is such that recommended idle stop areas are determined for each time of day; however, recommended idle stop areas may be determined for each type of weather. In this case, travel histories that include weather information may be acquired. Further, based on the determined recommend idle stopping areas for each time of day, statistics may be compiled according to the type of day, season, and other designated periods and recorded.

### (Example of Transmission Processing by the Server 300)

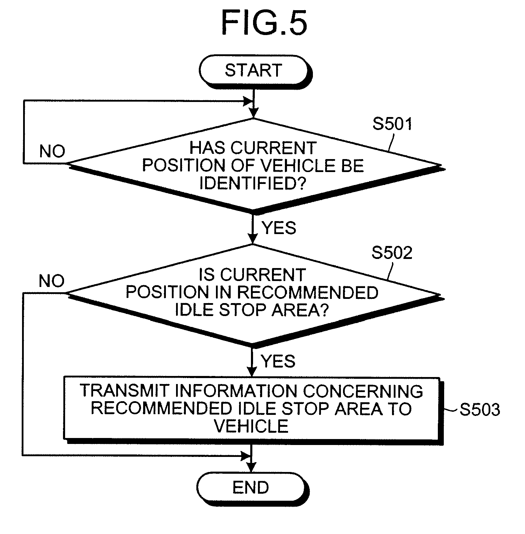

With reference to Fig. 5, one example of transmission processing by the server 300 according the present embodiment will be described. Fig. 5 is a flowchart of one example of transmission processing by the server according to the present example.

As depicted in the flowchart of Fig. 5, the server 300 determines whether the current position of a vehicle has been identified (step S501). Identification of the current position is executed based on identification information for the vehicle and current position information for the vehicle. At step S501, waiting occurs until the current position of the vehicle is identified (step S501: NO). When the current position of the vehicle has been identified (step S501: YES), it is determined whether the current position of the vehicle is a recommended idle stop area (step S502). Determination of whether the current position is a recommended idle stop area may be, specifically, a determination whether the current position is a recommended idle stop area at the current time or under the current weather conditions.

At step S502, if it is determined that the current position of the vehicle is a recommended idle stop area (step S502: YES), information concerning the recommended idle stop area is transmitted to the vehicle (step S503), ending a series of the processing. On the other hand, at step S502, if it is determined that the current position of the vehicle is not a recommended idle stop area (step S502: NO), a series of the processing comes to an end.

In the description, it is determined at step S502 whether the current position is a recommended idle stop area; however, it may be determined whether the current position is within a given distance from a recommended idle stop area.

### (Example of Data Recorded to Server 300)

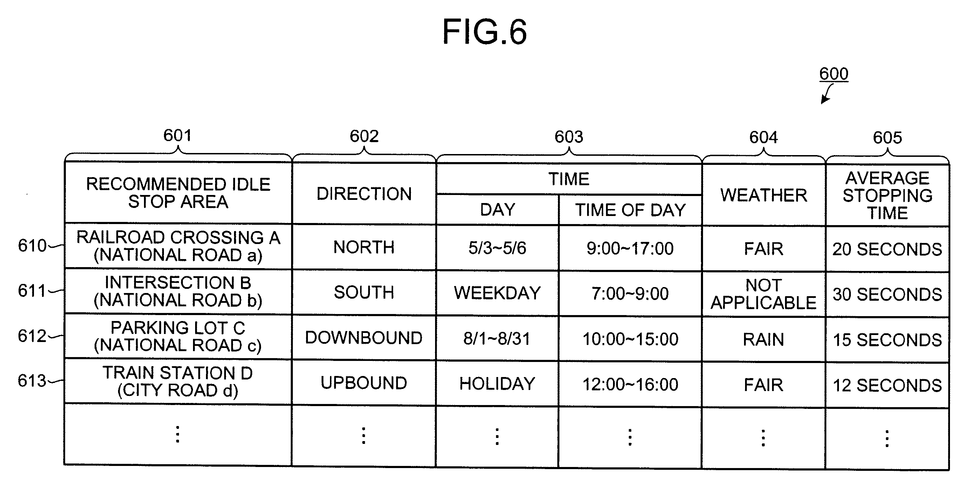

With reference to Fig. 6, an example of data recorded to the server of the present example will be described. Fig. 6 is a schematic of one example of data recorded to the server according to the present example.

As depicted in Fig. 6, in a recorded data list 600, recommended idle stop areas 601, directions 602, time 603, weather 604, and average stopping time 605 are recorded. As recommended idle stop areas 601, a railroad crossing A 610, an intersection B 611, a parking lot C 612, and a train station D 613 are recorded. In the following description, the railroad crossing A 610 will be taken as an example.

The railroad crossing A 610 is included at the head of a recommended idle stop area 601 that is along a national road a where the national road a intersects train tracks at the rail crossing A 610. The direction 602 of the rail crossing A 610 is north. The time 603 is from 9:00 to 17:00 on 3 May to 6 May. The weather 604 is fair. The average stopping time 605 is 20 seconds. Thus, in the upbound direction, the national highway a intersecting the rail crossing A 610, is a recommended idle stop area having a 20-second average stopping time from 9:00 to 17:00 on 3 May to 6 May when the weather is fair. Similarly, for the intersection B 611, the parking lot C 612, and the train station D 613, the direction 602, the time 603, the weather 604, and the average stopping time 605 are respectively recorded.

### (Example of Navigation Apparatus Display Screen 700 Based on Recorded Data)

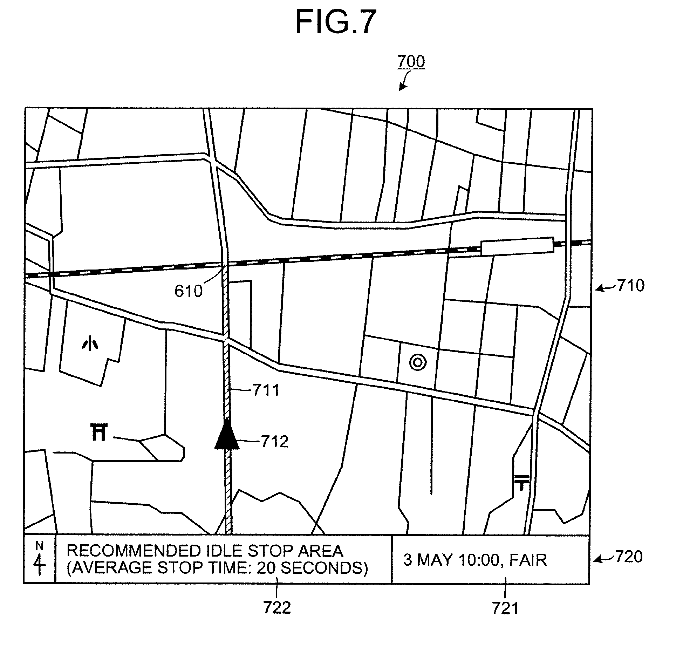

With reference to Fig. 7, an example of a navigation apparatus display screen 700 based on the data recorded on the server 300 will be described. Fig. 7 is a schematic of one example of a navigation apparatus display screen based on the data recorded on the server 300.

In Fig. 7, reference numeral 700 indicates a display screen of a navigation apparatus equipped on a vehicle. The display screen 700 displays a map 710 and text 720. On the map 710, the current position 712 of the vehicle traveling along a road 711 is displayed. In the forward direction (north) of the current position, the rail crossing A 610 is displayed. At this time, the navigation apparatus receives recorded data from the server 300 and upon receipt, the road 711 on the display screen 700, is displayed hatched with diagonal lines, different from the usual display, indicating a recommended idle stop area.

The display screen 721 further displays the current time and guidance 722. The current time is displayed as "3 May 10:00, Fair", i.e., Fig. 7 depicts a display screen when the rail crossing 610 included in the recorded data list 600 depicted in Fig. 6 is a condition for a recommended idle stop area 601. Further, the guidance 722 displays "recommended idle stop area (average stopping time: 20 seconds).

In this way, on the display screen 700 of a navigation apparatus, etc. that displays based on recorded data, it is indicated that the current position 712 is in a recommended idle stop area 601.

As described, when among stopping areas extracted based on given conditions, a stopping area has in its vicinity a given feature, the server 300 according to the present example sets the stopping area, as a recommended idle stop area. By using position information concerning such recommended idle stop areas, a user is able to know areas where idle stop should be executed. Thus, since idle stop can be executed at an appropriate location, improved fuel consumption and reduced carbon dioxide emission can be effectively achieved.

The server 300 according to the present example calculates the average vehicle stop time at recommended idle stop areas. According to such configuration, the user is able to know the average stop duration at a recommended idle stop area.

The travel history of a mobile object may include time or weather information. Thus, the server 300 according to the present example can determine a more precise recommended idle stop area according to the time or the weather.

When a railroad crossing, traffic signal, train station, or parking lot (a given feature) is in the vicinity of a stopping area, the server 300 according to the present example may determine a given range that includes the stopping area, as a recommended idle stop area. According to such configuration, a stop of a mobile object is limited to the most conceivable location and a recommended idle stop area can be determined.

The server 300 according to the present example transmits to a mobile object, position information concerning recommended idle stop areas. According to such configuration, appropriate transmission of position information concerning recommended idle stop areas is enabled and a user can use the transmitted position information to execute idle stop.

The server 300 according to the present example identifies the present position of a mobile object and when the identified current position is within a given range from a recommended idle stop area, position information concerning the recommended idle stop area is transmitted to the mobile object. According to such configuration, the user can obtain position information concerning the recommended idle stop area near the current position in real time.

As described, when a given feature is in the vicinity of a stopping area among stopping areas extracted based on given conditions, the information collecting apparatus, the information collecting method, the information collecting program, and the recording medium according to the present invention determine the stopping area as a recommended idle stop area. By using position information concerning such a recommended idle stop area, a user is able to know locations where idle stop should be executed. Thus, since idle stop can be executed at an appropriate location, improved fuel consumption and reduced carbon dioxide emission can be effectively achieved.

The information collecting method explained in the present embodiment may be implemented by a computer, such as a personal computer and a workstation, executing a program that is prepared in advance. The program is recorded on a computer-readable recording medium such as a hard disk, a flexible disk, a CD-ROM, an MO, and a DVD, and is executed by being read out from the recording medium by a computer. The program may be distributed through a network such as the Internet.

## Claims

1. An information collecting apparatus comprising:
an acquiring unit that acquires travel histories for mobile objects;
an extracting unit that based on the travel histories acquired by the acquiring unit, extracts a stopping area where a given number of mobile objects or more have stopped within a given area for a given period of time or longer; and
a determining unit that determines the stopping area extracted by the extracting unit to be a recommended stopping area when a given feature is in a vicinity of the stopping area.

2. The information collecting apparatus according to claim 1 further comprising a calculating unit that based on the number of mobile objects stopped in the stopping area extracted by the extracting unit and duration of each stop, calculates the average time that the mobile objects stop in the recommended idle stop area.

3. The information collecting apparatus according to claim 1, wherein
the acquiring unit acquires time information or weather information included in the travel histories of the mobile objects,
the extracting unit extracts the stopping area according to the time or the weather information, and
the determining unit, based on the stopping area extracted by the extracting unit, determines the recommended idle stop area according to the time or the weather information.

4. The information collecting apparatus according to claim 1, wherein the determining unit determines a given range that includes the stopping area to be the recommended idle stop area when a given feature is in the vicinity of the stopping area, the given feature being a railroad crossing, a traffic signal, a train station, or a parking lot.

5. The information collecting unit according any one of claims 1 to 4 further comprising a transmitting unit that transmits to the mobile objects, position information concerning the recommended idle stop area.

6. The information collecting apparatus according to claim 5 further comprising an identifying unit that identifies the current position of the mobile objects, wherein
the transmitting unit, when the current position of a mobile object is identified to be within the given range from the recommended idle stop area, transmits the position information concerning the recommended idle stop area to the mobile object.

7. An information collecting method comprising:
acquiring travel histories for mobile objects;
extracting, based on the travel histories acquired at the acquiring, a stopping area where a given number of mobile objects or more have stopped within a given area for a given period of time or longer; and
determining the stopping area extracted at the extracting to be a recommended stopping area when a given feature is in a vicinity of the stopping area.

8. An information collecting program causing a computer to execute the information collecting method according to claim 7.

9. A computer readable recording medium storing therein the information collecting program according to claim 8.
